(19) Europäisches Patentamt / European Patent Office / Office européen des brevets

(11) **EP 4 396 699 B1**

(12) **EUROPEAN PATENT SPECIFICATION**

(45) Date of publication and mention
of the grant of the patent:
**20.08.2025 Bulletin 2025/34**

(21) Application number: **22769057.5**

(22) Date of filing: **22.08.2022**

(51) International Patent Classification (IPC):
**G06F 17/17** (2006.01)      **G06N 3/063** (2023.01)
**G06F 7/544** (2006.01)      **G06N 3/048** (2023.01)

(52) Cooperative Patent Classification (CPC):
**G06F 17/17; G06F 7/544; G06N 3/048; G06N 3/063**

(86) International application number:
**PCT/US2022/075270**

(87) International publication number:
**WO 2023/034698 (09.03.2023 Gazette 2023/10)**

(54) **CONFIGURABLE NONLINEAR ACTIVATION FUNCTION CIRCUITS**

KONFIGURIERBARE NICHTLINEARE AKTIVIERUNGSFUNKTIONSSCHALTUNGEN

CIRCUITS DE FONCTION D'ACTIVATION NON LINÉAIRES CONFIGURABLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.09.2021 US 202117467079
15.06.2022 US 202217807125**

(43) Date of publication of application:
**10.07.2024 Bulletin 2024/28**

(73) Proprietor: **Qualcomm Incorporated
San Diego, CA 92121-1714 (US)**

(72) Inventors:
• **MOHAN, Suren
San Diego, California 92121-1714 (US)**
• **LI, Ren
San Diego, California 92121-1714 (US)**
• **KULKARNI, Prajakt
San Diego, California 92121-1714 (US)**
• **LAMB, Aaron Douglass
San Diego, California 92121-1714 (US)**

(74) Representative: **Reddie & Grose LLP
The White Chapel Building
10 Whitechapel High Street
London E1 8QS (GB)**

(56) References cited:
GB-A- 2 185 606      US-A1- 2019 266 479
US-A1- 2019 272 309      US-A1- 2022 147 790

• GRIGORIOS G CHRYSOS ET AL: "Pi-nets: Deep Polynomial Neural Networks", ARXIV.ORG, CORNELL UNIVERSITY LIBRARY, 201 OLIN LIBRARY CORNELL UNIVERSITY ITHACA, NY 14853, 8 March 2020 (2020-03-08), XP081617333
• GRIGORIOS CHRYSOS ET AL: "Deep Polynomial Neural Networks", ARXIV.ORG, CORNELL UNIVERSITY LIBRARY, 201 OLIN LIBRARY CORNELL UNIVERSITY ITHACA, NY 14853, 20 June 2020 (2020-06-20), XP081708596
• GRIGORIOS CHRYSOS ET AL: "Deep Polynomial Neural Networks", ARXIV.ORG, CORNELL UNIVERSITY LIBRARY, 201 OLIN LIBRARY CORNELL UNIVERSITY ITHACA, NY 14853, 27 February 2021 (2021-02-27), XP081885852, DOI: 10.1109/TPAMI.2021.3058891
• BOUGUEZZI SAFA ET AL: "Hardware Implementation of Tanh Exponential Activation Function using FPGA", 2021 18TH INTERNATIONAL MULTI-CONFERENCE ON SYSTEMS, SIGNALS & DEVICES (SSD), IEEE, 22 March 2021 (2021-03-22), pages 1020 - 1025, XP033916084, DOI: 10.1109/SSD52085.2021.9429506

EP 4 396 699 B1

**(Cont. next page)**

- **TRIPATHI RAGHUVENDRA PRATAP ET AL: "A Survey on Efficient Realization of Activation Functions of Artificial Neural Network", 2021 ASIAN CONFERENCE ON INNOVATION IN TECHNOLOGY (ASIANCON), IEEE, 27 August 2021 (2021-08-27), pages 1 - 9, XP033980416, DOI: 10.1109/ASIANCON51346.2021.9544754**

- **CHRYSOS GRIGORIOS G ET AL: "P-nets: Deep Polynomial Neural Networks", 2020 IEEE/CVF CONFERENCE ON COMPUTER VISION AND PATTERN RECOGNITION (CVPR), IEEE, 13 June 2020 (2020-06-13), pages 7323 - 7333, XP033804951, DOI: 10.1109/CVPR42600.2020.00735**

## Description

### INTRODUCTION

Aspects of the present disclosure relate processing nonlinear activation functions for machine learning models, and in particular to configurable nonlinear activation function circuits.

Machine learning is generally the process of producing a trained model (e.g., an artificial neural network), which represents a generalized fit to a set of training data. Applying the trained model to new data enables production of inferences, which may be used to gain insights into the new data.

As the use of machine learning has proliferated for enabling various machine learning (or artificial intelligence) tasks, the need for more efficient processing of machine learning model data has arisen. In some cases, dedicated hardware, such as machine learning (or artificial intelligence) accelerators or processors or similar circuits, may be used to enhance a processing system's capacity to process machine learning model data. For example, processing data with a nonlinear activation function may be distributed to a processor other than the primary matrix multiplication processor. However, distributing various aspects of processing a machine learning model across different processing devices may incur latency, memory use, power use, and other processing penalties.

Accordingly, there is a need for improved techniques for processing machine learning model data with nonlinear activation functions.

BOUGUEZZI SAFA ET AL: "Hardware Implementation of Tanh Exponential Activation Function using FPGA", 2021 18TH INTERNATIONAL MULTI-CONFERENCE ON SYSTEMS, SIGNALS & DEVICES (SSD), IEEE, pages 1020-102, discusses the hardware implementation of Tanh Exponential Activation Function using FPGA. Document TRIPATHI RAGHUVENDRA PRATAP ET AL: "A Survey on Efficient Realization of Activation Functions of Artificial Neural Network", 2021 ASIAN CONFERENCE ON INNOVATION IN TECHNOLOGY (ASIANCON), IEEE, 27 August 2021 (2021-08-27), pages 1-9; patent document US 2019/266479 A1; and document CHRYSOS GRIGORIOS G ET AL: "P-nets: Deep Polynomial Neural Networks", 2020 IEEE/CVF CONFERENCE ON COMPUTER VISION AND PATTERN RECOGNITION (CVPR), IEEE, 13 June 2020 (2020-06-13), pages 7323-7333; are also referenced.

### BRIEF SUMMARY

The invention is defined in the independent claims. Optional features are set out in the dependent claims.

The following description and the related drawings set forth in detail certain illustrative features of one or more embodiments.

### BRIEF DESCRIPTION OF THE DRAWINGS

The appended figures depict certain aspects of the one or more embodiments and are therefore not to be considered limiting of the scope of this disclosure.

FIG. 1 depicts an example configurable nonlinear activation (CNLA) function circuit.

FIG. 2 depicts example circuit blocks for implementing bypassable approximator blocks, such as described with respect to FIG. 1.

FIG. 3 depicts an example approximator.

FIG. 4 depicts an example machine learning model process flow.

FIG. 5 depicts an example method for performing processing using a configurable nonlinear activation function circuit.

FIG. 6 depicts an example of a pipelined successive-linear-approximation architecture that may be used to implement nonlinear functions used in machine learning model acceleration.

FIG. 7 depicts an example of a hyperbolic tangent (tanh) nonlinear activation function with non-uniform segments for defining approximated function outputs.

FIG. 8 depicts an example of a circuit for implementing a pipelined successive-linear-approximation architecture.

FIG. 9 depicts an example of a linear approximator circuit, which may be an example of the linear approximator elements in circuit of **FIG. 8**.

**FIG. 10** depicts an example processing system that may be configured to perform the methods described herein.

To facilitate understanding, identical reference numerals have been used, where possible, to designate identical elements that are common to the drawings. It is contemplated that elements and features of one embodiment may be beneficially incorporated in other embodiments without further recitation.

## DETAILED DESCRIPTION

Aspects of the present disclosure provide improved techniques for processing nonlinear activation functions associated with machine learning models.

Nonlinear activations are key components of various types of machine learning models, including neural network models. While some nonlinear activation functions are implemented as piecewise linear functions (e.g., rectified linear unit (ReLU), leaky ReLU, and others), other nonlinear activations functions require complex mathematical functions (e.g., sigmoid, hyperbolic tangent (tanh), and others). In some cases, the complex mathematical functions may be implemented using interpolation, such as cubic spline interpolation. For example, an interpolated output value may be determined in some aspects using a look-up table (LUT) to match output values with input values. When a target input value is not mapped in the LUT, LUT values associated with input values adjacent to the target input value may be used to interpolate an output value for the target input value.

Conventionally, nonlinear activation functions may be implemented in software rather than hardware owing to the wide range of possible activation functions usable in machine learning models. However, such implementations typically require moving model data between processing devices (e.g., between a neural processing unit (NPU) performing matrix multiplication and accumulation and a digital signal processor (DSP) processing the nonlinear activation function), thus incurring power and latency penalties. Where nonlinear activation functions have been implemented in hardware, they have generally been limited to supporting only a small number of nonlinear activation functions and thus cannot be configured to support evolving machine learning model architectures without falling back to outsourcing the nonlinear activation function processing to a distributed processing unit.

For example, the rectified linear unit (ReLU) is a commonly used activation function in deep learning models. The function returns 0 if it receives a negative input, and returns the input, x, other. Thus it can be written as $f(x) = max(0, x)$. ReLU functions are generally not implemented by the primary matrix multiplication and accumulation processing unit, such as a compute-in-memory (CIM) array in some examples. Thus, the need to distribute the ReLU function, or another nonlinear activation function, is costly from a processing standpoint. Moreover, as the activation function gets more complex, the processing cost likewise gets more significant (e.g., for performing relatively higher power exponential and division operations that are part of certain nonlinear activation functions, as described further below).

To overcome the shortcomings of conventional solutions, aspects described herein relate to a configurable nonlinear activation (CNLA) function circuit that may be implemented in hardware for efficient processing. In particular, because it can be implemented in hardware, the CNLA function may be co-located with other processing circuits optimized for other machine learning model processing tasks, such as CIM arrays and digital multiply-and-accumulate (DMAC) circuits that are optimized for performing vector and matrix multiplication and accumulation functions.

In order to improve processing efficiency, aspects described herein may use polynomial approximations to approximate complex functions, such as may be used within nonlinear activation functions. In some cases, aspects described herein may use series expansions, such as a Taylor series. Generally, a Taylor series of a function (e.g., $f(x)$) is an infinite sum of terms that are expressed in terms of the function's derivatives at a single point. For many functions, the function and the sum of its Taylor series are equal near this point. The partial sum formed by the first $n + 1$ terms of a Taylor series is a polynomial of degree $n$ that is referred to as the $n$th Taylor polynomial of the function. Thus, Taylor polynomials allow for processing efficient approximations of a function, which generally become better as $n$ increases.

The CNLA function circuits described herein may implement one or more polynomial approximation blocks, such as cubic approximation blocks, which generally enhance cubic spline interpolation to make it more efficient and more generalized to cover a wider variety of nonlinear activation functions. Moreover, the CNLA function circuits may be implemented as a pipelined digital block that can use nonlinearly segmented look-up tables (LUTs) and mixed orders of approximations (e.g., pipelined linear, quadratic, and cubic approximations). Thus, the CNLA function circuits described herein can be configured to meet many different performance goals, unlike conventional nonlinear activation function circuits.

Accordingly, the CNLA function circuits described herein provide a technical solution to the technical problem of implementing a wide range of nonlinear activation functions in machine learning model processing systems. Further, the CNLA function circuits described herein provide a technical improvement by way of increased model processing performance compared to existing solutions, including lower latency, lower power use, improved memory efficiency, and others as described herein.

*Example Configurable Nonlinear Activation Function Circuit*

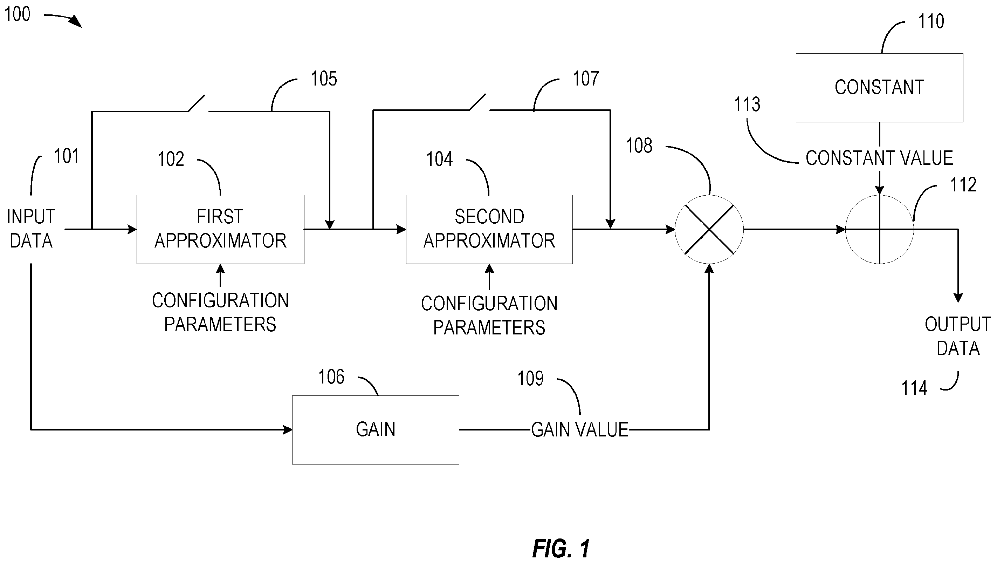

**FIG. 1** depicts an example configurable nonlinear activation (CNLA) function circuit 100.

Generally, CNLA function circuit 100 may be configured to receive input data 101 (e.g., an output value from a layer of a machine learning model) and to perform various nonlinear activation functions to generate output data 114 (e.g., "activations"). CNLA function circuit 100 may be co-located and pipelined with other machine learning model processing circuits, such as a CIM array, DMAC, and others, and may be configured to perform activation functions based on the output of the other machine learning model processing circuits.

In some examples, input data 101 may be received from a buffer or other memory. In other examples, input data 101 may be received directly from the output of another processing block, such as the output of a CIM array or another vector and matrix multiplication and accumulation block, or the like.

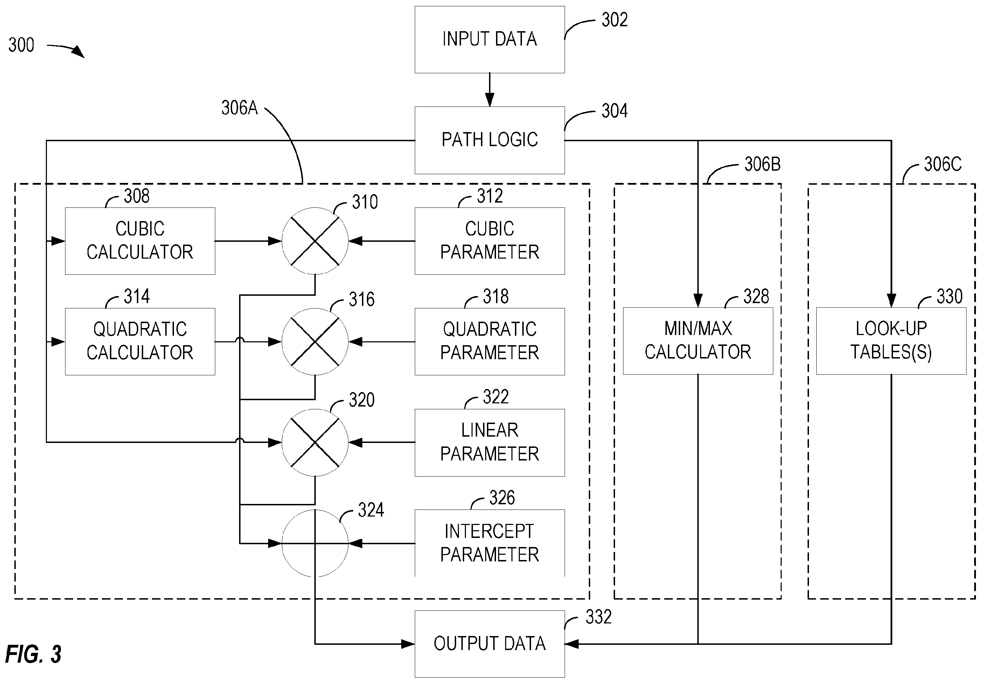

CNLA function circuit 100 includes a first approximator block 102, which may generally be configured to perform a hardware-based mathematical function, such as on input data 101. An example approximator is described in detail with respect to **FIG. 3.**

In some cases, first approximator is one of a linear approximator (e.g., configured to perform a function, such as $ax + b$), a quadratic approximator (e.g., configured to perform a function, such as $ax^2 + bx + c$), or a cubic approximator (e.g., configured to perform a function, such as $ax^3 + bx^2 + cx + d$), where x is the input data and *a, b, c,* and *d* are configurable parameters. Generally, a linear, quadratic, or cubic approximator may be used to approximate some given function, which may or may not be a polynomial function. First approximator 102 may be configured with parameters, retrieved from, for example, a memory, a register, a look-up table, or the like. As described in further detail below with respect to **Table 2,** these different forms of approximation and associated configurable parameters can be used to approximate many types of nonlinear activation functions.

CNLA function circuit 100 further includes a second approximator block 104, which, like first approximator block 102, may generally be configured to perform a hardware-based mathematical function, such as a linear, quadratic, or cubic function. As described in more detail below, CNLA function circuit 100 may be configured to use first approximator block 102 and second approximator block 104 in series for more complex functions, such that the output of first approximator block 102 becomes an input to second approximator block 104. CNLA function circuit 100 may be further configured to use only one of first approximator block 102 or second approximator block 104 when a simpler nonlinear function is being processed, thereby saving power.

In some implementations, first approximator 102 and second approximator 104 may comprise the same circuit block (e.g., two instances of the same circuit elements within circuit 100). For example, first approximator 102 and second approximator 104 may comprise cubic approximators in some aspects. In other implementations, first approximator 102 and second approximator 104 may comprise different circuit elements, and in such cases, generally second approximator 104 will comprise a cubic approximator and first approximator 102 will comprise a lower order approximator, such as a quadratic or linear approximator. However, in other embodiments, the order of the higher and lower order approximators may be reversed.

CNLA function circuit 100 includes a configurable bypass 105, which allows first approximator 102 to be bypassed in various scenarios, such as if a function only requires a lower order approximator than first approximator 102 and second approximator 104 is such a lower order approximator. When, for example, first approximator 102 is bypassed via configurable bypass 105, then input data 101 is provided directly to second approximator 104 instead and not processed by first approximator 102. In various aspects, first approximator 102 may be a higher order approximator compared to second approximator 104, or vice versa, or they may be of the same order (e.g., both linear, quadratic, or cubic). The configurable bypass 105 allows for saving processing time and energy when only one approximator is necessary.

CNLA function circuit 100 further includes another configurable bypass 107, which allows second approximator 104 to be bypassed in various scenarios, such as if a function only requires a first approximation, which first approximator 102 is capable of performing without second approximator 104. When, for example, second approximator 104 is bypassed via configurable bypass 107, the output of first approximator 102 is provided directly to multiplier 108.

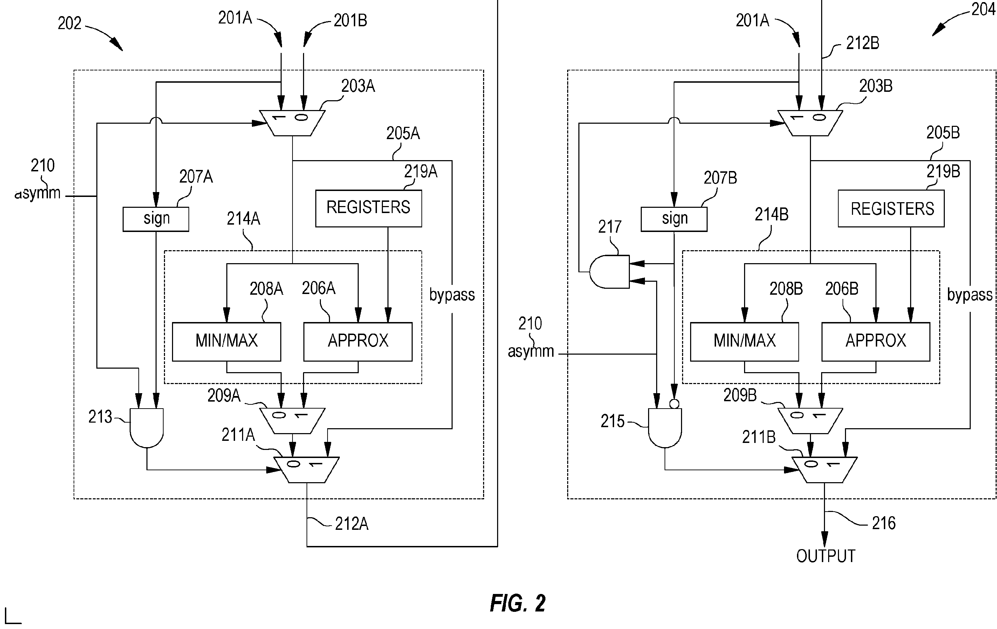

Generally, configurable bypasses 105 and 107 allow CNLA function circuit 100 to be configured for maximum versatility, while saving power and avoiding unnecessary circuit block processing in various scenarios. Further, configurable bypasses allow for non-symmetric and anti-symmetric nonlinear activation functions to be configured for processing by CNLA function circuit 100. **FIG. 2** depicts example circuit aspects for implementing configurable bypasses 105 and 107 (e.g., bypasses 205A and 205B).

CNLA function circuit 100 further includes a gain block 106 configured to provide a gain value to multiplier 108. In some aspects, gain block 106 is configured to generate a gain value 109 based on a gain function implemented by gain block 106. In one example, the gain function may be in the form $g = ax + b$, where g is the gain value, x is the input data 101 value, and *a* and *b* are configurable parameters. More generally, the gain block 106 may modify the input data multiplicatively (*a*) and/or additively (*b*) to generate the gain value.

The gain value 109 generated by gain block 106 is multiplied with the output of first and/or second approximators 102 and 104 via multiplier 108. In other aspects, gain block 106 may be configured to generate a gain value that is not based on a function of input data 101 (e.g., by setting *a* to zero in the above expression for g). Generally, the parameters (e.g., *a* and *b* in the example above) or value for gain block 106 may be retrieved from, for example, a memory, a register, a look-up table, or the like.

CNLA function circuit 100 further includes a constant block 110 configured to store a configurable (e.g., programmable) constant value 113 and adder 112 configured to add the constant value 113 to the output of multiplier 108 (e.g., a gain multiplier). The constant value 113 stored in constant block 110 may be retrieved from, for example, a memory, a register, a look-up table, or the like.

The inclusion and arrangement of first approximator block 102, second approximator block 104, configurable bypasses 105 and 107, gain block 106, multiplier 108, constant block 110, and adder 112 allows for CNLA function circuit 100 to be configured to perform a wide variety of known and later developed nonlinear activation functions. Moreover, CNLA function circuit 100 may be efficiently configured to process a wide variety of nonlinear activation functions by merely updating parameters for the first approximator 102, second approximator 104, gain block 106, and constant block 110. When both approximator blocks 102 and 104 are used to simulate a nonlinear function, each may be referred to as performing an individual function (e.g., a first function for the first approximator block 102 and a second function for the second approximator 104). This design beneficially supports arbitrary non-symmetric nonlinear curves for complex functions.

**Table 1,** below, provides example parameters for various nonlinear activation functions that CNLA function circuit 100 of **FIG. 1** can be configured to perform, including parameters for approximator blocks 206A and 206B of **FIG. 2.** In **Table 1,** the gain is considered to have the form $ax + b$, as is in the example of gain block 106 in **FIG. 1,** but note that in other embodiments, the gain may be a scalar value, or a different functional form. Similarly, a quadratic approximator is considered to have the form $ax^2 + bx + c$ and a cubic approximator is considered to have the form $ax^3 + bx^2 + cx + d.$ In the following table, subscripts are used to indicate parameter assignments, e.g., *G* for gain parameters, 1 for first approximator, and 2 for second approximator parameters.

**Table 1**

| Nonlinear Activation Function | Form | Parameters |
|---|---|---|
| ReLU | $ReLU(x) = \max(0,x)$ | Asymmetric = 0<br>Gain: ($a_G = 0$, $b_G = 1$)<br>Constant = 0<br>First Approximator $\rightarrow$ quadratic parameters {$a_1 = 0$, $b_1 = 1$, $c_1 = 0$}<br>Second approximator $\rightarrow$ max function |
| ReLU6 | $ReLU6(x) = \min(\max(0, x), 6)$ | Asymmetric = 0<br>Gain: ($a_G = 0$, $b_G = 1$)<br>Constant = 0<br>First Approximator $\rightarrow$ max function<br>Second Approximator $\rightarrow$ min function |
| Swish | $swish(x) = x \cdot sigmoid(x)$ | Asymmetric = 0<br>Gain: ($a_G = 1$, $b_G = 0$)<br>Constant = 0<br>First Approximator $\rightarrow$ quadratic parameters {<br>$a_1 = 0$, $b_1 = 1$, $c_1 = 0$}<br>Second Approximator $\rightarrow$ sigmoid look-up table |
| Hard Swish | $$hswish(x) = x\frac{ReLU6(x+3)}{6}$$ | Asymmetric = 0<br>Gain: ( $a_G = \dfrac{1}{6}$, $b_G = 0$)<br>Constant = 3<br>First Approximator $\rightarrow$ max function<br>Second Approximator $\rightarrow$ min function |
| Hyperbolic Tangent | $$\tanh(x) = \frac{e^x - e^{-x}}{e^x + e^{-x}}$$ | Asymmetric = 0<br>Gain: ($a_G = 0$, $b_G = 1$)<br>Constant = 0<br>First Approximator $\rightarrow$ Quadratic parameters {$a_1 = 0$, $b_1 = 1$, $c_1 = 0$}<br>Second Approximator $\rightarrow$ tanh look-up table |

| Nonlinear Activation Function | Form | Parameters |
|---|---|---|
| Sigmoid | $\sigma(x) = \dfrac{e^x}{1 + e^x}$ | Asymmetric = 0<br>Gain: ($a_G$= 0, $b_G$ = 1)<br>Constant = 0<br>First Approximator $\rightarrow$-linear parameters {<br>$a_1$ = 1, $b_1$ = 0}<br>Second approximator $\rightarrow$ sigmoid look-up table |
| Exponential Linear Unit (ELU)<br><br>$\mathrm{ELU}(x) = \begin{cases} x & x > 0 \\ \alpha(e^x - 1) & x \leq 0 \end{cases}$ | | Asymmetric = 1<br>Gain: ($a_G$ = 0, $b_G$ = $\alpha$)<br>Constant = 0<br>For $x \geq 0$: { First Approximator $\rightarrow$ quadratic parameters { $a_1$ = 0, $b_1$ = 1/$\alpha$, $c_1$ = 0}<br>Second approximator $\rightarrow$ Bypass }<br>For $x < 0$: { First Approximator $\rightarrow$ Bypass Second approximator $\rightarrow$ exponential look-up table } |
| Gaussian Error Linear Unit (GELU) | $\mathrm{GELU}(x) \approx$<br><br>$1 + \tanh\left[ \sqrt{\dfrac{2}{\pi}}(x \right.$<br><br>$\left. + 0.044715x^3) \right.$ | Asymmetric = 0<br>Gain: ($a_G$ = 0, $b_G$ = 1)<br>Constant = 1<br>First Approximator $\rightarrow$ cubic parameters {<br><br>$a_1 = \sqrt{\dfrac{2}{\pi}} * 0.044715, b_1 =$<br><br>$0, c_1 = \sqrt{\dfrac{2}{\pi}}, d = 0$}<br><br>Second Approximator $\rightarrow$ tanh look-up table |
| GELU variant | $\mathrm{GELU}(x) \approx x * \sigma(1.702x)$ | Asymmetric = 0<br>Gain: ($a_G$ = 1, $b_G$ = 0)<br>Constant = 0<br>First Approximator $\rightarrow$ quadratic parameters { $a_1$ = 0, $b_1$ = 1.072, $c_1$ = 0}<br>Second approximator $\rightarrow$ sigmoid look-up table |
| Note that in the ELU function above, the $\alpha$ parameter may be configured as a hyperparameter by a model designer. | | |

Notably, in some implementations, parameters for an approximator may be given in a form (e.g., cubic with *a, b, c,* and *d* parameters or quadratic with *a, b,* and c parameters), even where the approximator is performing a lower order function (e.g., linear). This is because setting, for example, the cubic parameter *a* to zero effectively collapses the approximation equation to a lower order quadratic function, and likewise setting the quadratic parameter *a* to zero effectively collapses the approximation equation to a linear equation. Thus, an approximator may be configured, for example, for a "quadratic function" when it is configured with quadratic parameters, but the result of the parameters may reduce the function to a linear function, as in the example of ReLU above in **Table 2.** This may allow standardization of the parameter set despite the order of the underlying function to be configured by the parameters, thereby simplifying the implementation.

**FIG. 2** depicts example circuit blocks 202 and 204 for implementing bypassable approximator blocks 206A and 206B. Bypassable approximator blocks 206A and 206B may correspond to first approximator block 102 and second approximator block 104 of **FIG. 1** in one example.

**In FIG. 2,** circuit block 202 is configured to control use of function block 214A, which includes first approximator 206A and minimum and maximum function block 208A in this example. Similarly, circuit block 204 controls use of function block 214B, which includes minimum and maximum function block 208B and second approximator 206B, in this example. The first and second approximator blocks 206A and 206B may be configured to implement nonlinear activation functions, such as those described above with respect to **Table 1.**

Note that the first approximator 102 in **FIG. 1** requires only one input, but circuit block 202 includes two input ports, 201A and 201B, which allows for multiple inputs. The depicted configuration of circuit block 202 may be adopted in order to present the same external interface for both circuit blocks 202 and 204, which may simplify configuration and integration. In some aspects, the two input ports 201A and 201B of circuit block 202 may be tied together in an implementation where circuit block 202 receives a single input (such as input data 101 in **FIG. 1)** via input port 201A. In an alternative implementation, circuit block 202 can be simplified by removing input port 201B and removing input mux 203A such that 201A would be provided directly to 214A and 207A.

Generally, input ports 201A and 201B may receive various types of input data for processing, including signed multibit integer data. In one example, the input data is 8-bit 2s complement input data.

Input selector muxes 203A and 203B are configured to control which input data port is used for circuit blocks 202 and 204, respectively. For example, input selector mux 203B may select between input data port 201A (e.g., when circuit block 202 is being bypassed) or 212B (e.g., when circuit blocks 202 and 204 are being processed in series).

Bypass selector muxes 211A and 211B are configured to control bypassing function blocks 214A and 214B of circuit blocks 202 and 204, respectively. For example, when circuit block 202 is to be bypassed, bypass selector mux 211A selects bypass line 205A to provide an output to output port 212A. Similarly, when circuit block 204 is to be bypassed, bypass selector mux 211B selects bypass line 205B to provide an output to output port 216. Thus, processing with circuit block 202 and/or 204, as controlled by the configurable bypasses 205A and 205B, results in an output at output port 216.

As discussed in more detail with respect to **FIG. 3,** approximator blocks 206A and 206B may be configured with configuration parameters (e.g., function specific coefficients as in **Table 1,** above) stored in registers 219A and 219B, respectively. Similarly, as in **Table 1,** above, where approximator blocks 206A or 206B are configured to perform a look-up table-based function, the table values may be stored in registers 219A and 219B, respectively.

Each circuit block (202 and 204) further includes a minimum and maximum function block (208A for circuit block 202 and 208B for circuit block 204) for providing minimum and maximum functions. Generally, a minimum (or "min") function will return the minimum value of the provided inputs. Similarly, a maximum (or "max") function will return the maximum value of the provided inputs. In one example, minimum and maximum function blocks 208A and 208B may comprise multibit digital comparators that run in either a single cycle or multi-cycle mode.

The configuration of function blocks 214A and 214B may include a setting for function selector muxes 209A and 209B, respectively. In other words, whether or not function blocks 214A and 214B output a min/max output from mix/max blocks 208A and 208B or a value from approximators 206A and 206B is based on the configuration of function selector muxes 209A and 209B. Note that in other examples, function blocks 214A and 214B may include additional function blocks that may be selected by a mux.

As depicted in **FIG. 1** where approximator blocks can be processed in series, in **FIG. 2** the output 212A of circuit block 202A, which includes a first approximator block 206A, is provided as an input 212B to circuit block 204, which includes a second approximator block 206B. As in **FIG. 1** where bypasses 105 and 107 control use of the first and second approximator blocks 102 and 104, here the selectable bypasses 205A and 205B control use of approximator blocks 206A and 206B.

An asymmetric signal line 210 controls a configuration of the circuit blocks 202 and 204. In one example, circuit blocks 202 and 204 are configured based on values on asymmetric signal line 210 and output values from sign blocks 207A and 207B based on the input data received via input data port 201A. For example, the binary value received via the asymmetric signal line 210 and the binary value output from sign block 207A interact at AND gate 213 to control the selection of output by mux 211A. As another example, the binary value received via the asymmetric signal line 210 and the binary value output from sign block 207B interact at AND gate 217 to control the selection of an input data port (as between 201A and 212B) via mux 203B. As a further example, the binary value received via the asymmetric signal line 210 and the inverted binary value output from sign block 207B interact at and gate 215 to control the selection of output mux 211B.

**Table 2,** below, provides a summary of configurations for circuit blocks 202 and 204:

**Table 2**

| Sign of Input Data at 201A | Asymm Value (210) | Bypass First Approximator (202) | Bypass Second Approximator (204) | First Approximator (206A) Output | Second Approximator (206B) Output |
|---|---|---|---|---|---|
| Positive Sign block (207A or 207B) output = 0 | 1 | No | Yes | Nonlinear based on configured nonlinear activation function if input value $x \geq 0$ | Bypassed per 205B |
| Negative Sign block (207A or 207B) output = 1 | 1 or 0 | Yes | No | Bypassed per bypass 205A | Nonlinear based on configured nonlinear activation function if input value $x < 0$ |
| Positive or Negative | 0 | No | No | Nonlinear based on configured nonlinear activation function | Nonlinear based on configured nonlinear activation function |

*Example Approximator for Configurable Nonlinear Activation Function Circuit*

**FIG.** 3 depicts an example approximator 300, which may be an example of one or both of first approximator 102 and second approximator 104 of FIG. 1 and/or approximators 206A and 206B of **FIG. 2.**

Approximator 300 receives input data 302 (e.g., pre-activation data) for processing. In some examples, input data 302 may be received from a buffer or other memory. In other examples, input data may be received directly from the output of another processing block, such as the output of a CIM array or another vector and matrix multiplication and accumulation block. Further, input data may be received from another approximator, such as if approximator 300 is the second approximator 104 in FIG. 1 or the second approximator 206B in **FIG. 2.**

In some implementations, an approximator (such as 300) may include alternative processing paths. In such cases, path logic 304 may be configured to route input data 302 to the appropriate processing path based on, for example, a configuration parameter for approximator 300.

In this example, processing path 306A provides a cubic approximation path for input data 302.

In processing path 306A, input data 302 is provided to cubic calculator 308, which performs a cubic operation (e.g., $x^3$, where x is the input data) and then the output is multiplied with cubic parameter 312 at multiplier 310. The output of multiplier 310 is then provided to accumulator 324.

Input data 302 is also provided to quadratic calculator 308, which performs a quadratic operation (e.g., $x^2$, where x is the input data) and then the output is multiplied by quadratic parameter 318 at multiplier 316. The output of multiplier 316 is then provided to accumulator 324.

Input data 302 is also provided to multiplier 320 where it is multiplied by linear parameter 322. The output of multiplier 320 is then provided to accumulator 324.

Accumulator (adder) 324 accumulates the outputs of multipliers 310, 316, and 320 as well as intercept parameter 326 to generate output data 332.

Cubic parameter 312, quadratic parameter 318, linear parameter 322 and intercept parameter 326 may all be stored in a memory or the like (e.g., in registers) accessible to accumulator 300. In some cases, a control unit, such as a memory control unit or finite state machine, may configure approximator 300 with parameters stored in the memory. In various examples, cubic parameter 312, quadratic parameter 318, linear parameter 322 and intercept parameter 326 may be set according to values described above with respect to **Table 2.**

As above, the order of the approximation can be configured by configuring the aforementioned parameter values. For example, for approximator 300 to perform a quadratic approximation, cubic parameter 312 can be set to zero. Similarly, for approximator 300 to perform a linear approximation, cubic parameter 312 and quadratic parameter 318 can be set to zero.

Certain nonlinear activation functions require alternative functions, such as minimum and maximum functions.

Accordingly, processing path 306B provides a minimum and/or maximum calculator that may be used, for example, with the ReLU and ReLU6 functions described above in **Table 2.** Processing path 306B may be selected by path logic 304 based on configuration data for approximator 300.

Further, certain nonlinear activation functions may be implemented using look-up tables, which provide a more power and time efficient mechanism for generating values for certain nonlinear activation functions. Accordingly, processing path 306C provides a look-up table-based processing path that may be used, for example, wherever a sigmoid, tanh, or similar function is used by a nonlinear activation function. Note that sigmoid and tanh may be calculated from each other, so in some cases, only a single look-up table (e.g., sigmoid or tanh, but not both) is stored and used to implement both functions. One or more look-up tables may be stored in a memory and accessible to approximator 300, including a memory tightly coupled to approximator 300.

*Example Machine Learning Model Process Flow with Configurable Nonlinear Activation Function Circuit*

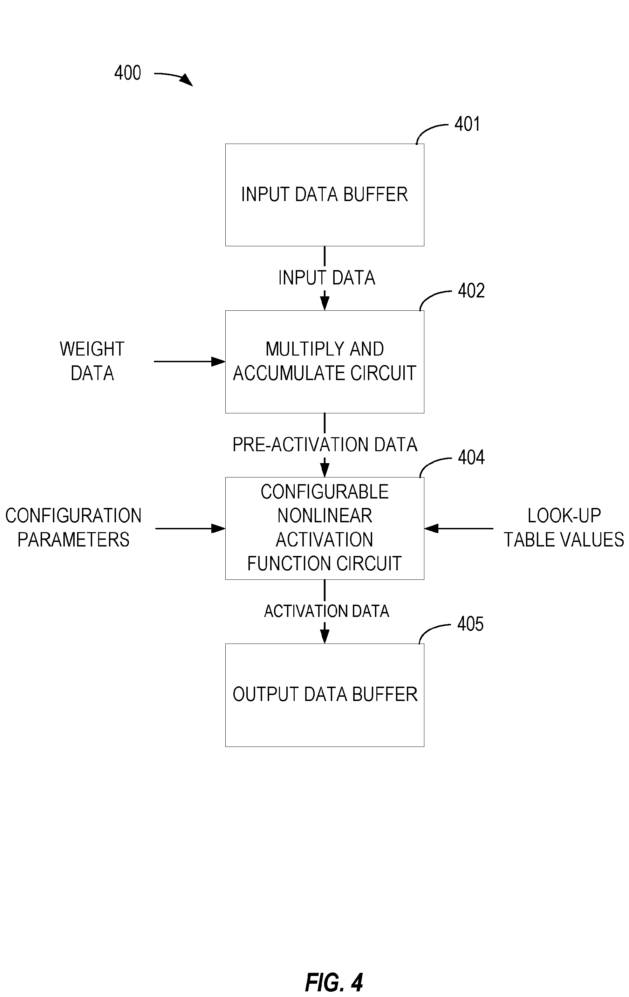

**FIG. 4** depicts an example machine learning model data flow 400 that implements a configurable nonlinear activation function circuit, such as described above with respect to **FIGS. 1-3.**

In flow 400, input data is stored in an input data buffer 401 (e.g., machine learning model layer input data) and then provided to a multiply and accumulate (MAC) circuit 402. MAC circuit 402 may generally be configured to perform vector, array, and matrix multiplication and accumulation operations, such as those used frequently in convolutional neural networks. In some examples, MAC circuit 402 may include one or more compute-in-memory (CIM) arrays. Alternatively, or additionally, MAC circuit 402 may include a digital multiply and accumulate (DMAC). In yet further examples, multiply and accumulate circuit 402 may be a portion of a machine learning accelerator, such as a neural processing unit (NPU), or another type of processing unit optimized for performing machine learning processing. In another implementation, MAC circuit 402 may be replaced by a vector/matrix or matrix/matrix processing engine.

MAC circuit 402 processes the input data with weight data (e.g., neural network weight data) to generate pre-activation data. For example, MAC circuit 402 may process input data to a layer of a neural network model and generate pre-activation data as an output.

The pre-activation data is provided to configurable nonlinear activation (CNLA) function circuit 404, which is configured to generate output data (e.g., activations) based on a configured nonlinear activation function. The output data may then be stored in output data buffer 405 for subsequent use, such as for processing another layer in a machine learning model, or as output from the machine learning model, and the like.

CNLA function circuit 404 may be configured with configuration parameters, such as described with respect to CNLA function circuit 300 in **FIG. 3** and those described in **Tables 1** and **2.** Further, CNLA function circuit 404 may be configured to access look-up tables depending on the configured activation function.

In some cases, configuration parameters may include identification of a nonlinear activation function to be applied to the input data. Based on the determined nonlinear activation function, appropriate parameters (such as those in **Table 2)** may be retrieved from a memory (e.g., registers) and applied to CNLA function circuit 404 thereby configuring it for processing the input data. In some examples, a finite state machine, a memory control unit, or another controller, may perform the configuration of CNLA function circuit 404.

Notably, CNLA circuit 404 may be configured to process multiple batches of input data using the same configuration, or may update its configuration for every new batch of input data. Thus, CNLA circuit 404 provides a very flexible and efficient means for performing configurable nonlinear activations for machine learning tasks, such as training and inferencing.

*Example Method for Performing Processing Using a Configurable Nonlinear Activation Function Circuit*

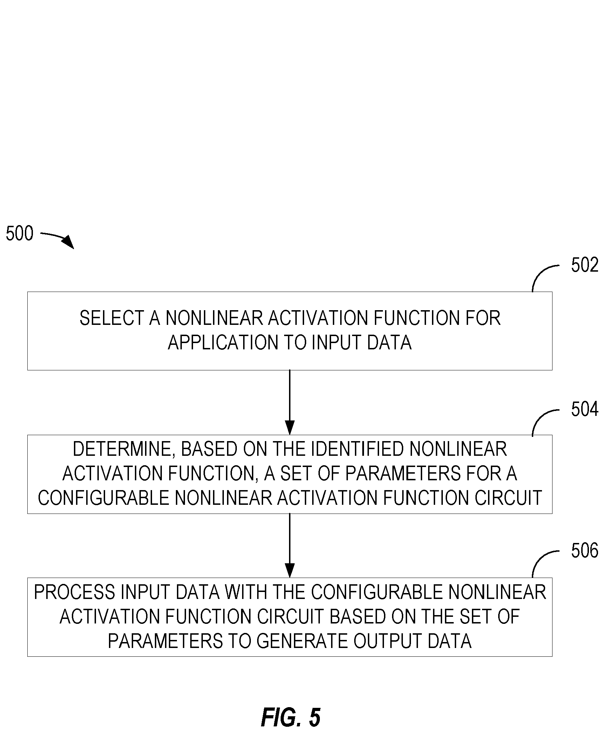

**FIG. 5** depicts an example method 500 for performing processing using a configurable nonlinear activation function circuit.

Method 500 begins at step 502 with selecting a nonlinear activation function for application to input data. For example, the nonlinear activation function may be one of the functions listed in **Table 2,** or another nonlinear activation function.

Method 500 then proceeds to step 504 with determining, based on the selected nonlinear activation function, a set of parameters for a configurable nonlinear activation function circuit. For example, the parameters for the determined nonlinear activation function may be as above in **Tables 1** and **2.**

Method 500 then proceeds to step 506 with processing input data with the configurable nonlinear activation function circuit based on the set of parameters to generate output data. For example, the output data may be activation data for a layer of a neural network model.

In some examples, the set of parameters includes a combination of one or more gain parameters, a constant parameter, and one or more approximation functions to apply to the input data via the configurable nonlinear activation function circuit. For example, the set of parameters may be as discussed above with respect to **FIGS. 1** and **2** and in **Table 1.**

In some examples, method 500 further includes retrieving the set of parameters from a memory based on the determined nonlinear activation function. In some examples, the memory may be one or more registers storing the parameter values.

In some examples, the configurable nonlinear activation function circuit includes a first approximator configured to approximate a first function of the one or more approximation functions; a second approximator configured to approximate a second function of the one or more approximation functions; a first gain multiplier configured to multiply a first gain value based on one or more gain parameters; and a constant adder configured to add a constant value, such as depicted and described with respect to **FIG. 1.**

In some examples, the configurable nonlinear activation function circuit includes a first bypass configured to bypass the first approximator. In some examples, the configurable nonlinear activation function circuit includes a second bypass configured to bypass the second approximator. In some examples, the configurable nonlinear activation function circuit includes an input data bypass configured to bypass the first approximator and to provide input data to the second approximator.

In some examples, at least one of the first approximator and the second approximator is a cubic approximator. In some examples, an other one of the first approximator and the second approximator is one of a quadratic approximator or a linear approximator. In some examples, an other one of the first approximator and the second approximator is configured to perform a min or max function, such as depicted with respect to path 306B in **FIG. 3.** In some examples, an other one of the first approximator and the second approximator is configured to access a look-up table for an approximated value, such as depicted with respect to path 306C in **FIG. 3.**

In some examples, both the first approximator and the second approximator are cubic approximators.

Note that **FIG. 5** is just one example, and in other examples, methods such as those described herein, may be implemented with more, fewer, and/or different steps.

*Example Pipelined Approximation for Non-Linear Functions*

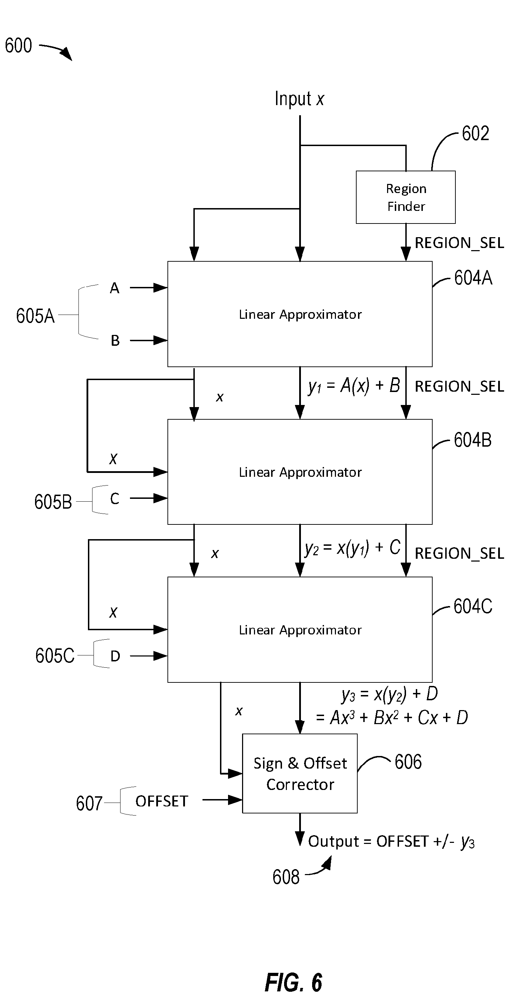

**FIG. 6** depicts an example of a pipelined successive-linear-approximation architecture 600 that may be used to implement nonlinear functions used in machine learning model acceleration. For example, architecture 600 may be used to implement the approximator 102 and 104 described with respect to **FIG. 1** and 206A and 206B described with respect to **FIG. 2.**

Generally, **FIG. 6** depicts input $x$ flowing in a pipelined fashion through the linear approximators 604A-C. Architecture 600 is a power and space efficient way to implement cubic approximation using successive linear approximation blocks 604A-C. Specifically, an input x is processed in linear approximator block 604A to determine an output $y_1 = Ax + B$, where $A$ and $B$ are coefficients 605A used by linear approximator block 604A.

Next, $y_1$ is provided as an input to linear approximator block 604B to determine an output $y_2 = x(y_1) + C$, where $C$ is a coefficient 605B used by linear approximator block 604B. Note that $x(y_1)$ indicates $y_1$ multiplied by $x$.

Next, $y_2$ is provided as an input to linear approximator block 604C to determine an output $y_3 = x(y_2) + D$, where $D$ is a coefficients 605C used by linear approximator block 604C. Expanding $y_3$ based on the successive linear approximations gives:

$$y_3 = x(y_2) + D$$

$$= x(x(Ax + B) + C) + D$$

$$= Ax^3 + Bx^2 + Cx + D,$$

which is a cubic approximation based on the input x. Notably, the successive linear approximation approach implemented in architecture 600 reduces the number of multipliers needed, which reduces complexity and power used compared to a conventional cubic approximator architecture. Further, architecture 600 allows a pipelined implementation, which in steady-state produces a new output every cycle and therefore improves throughput.

To further improve processing efficiency, the coefficients A, B, C, and D (605A-C) may be stored in registers rather than, for example, an SRAM or DRAM, which improves power and latency performance of architecture 600. For example, the use of read power from a host system SRAM can be avoided by using local registers storing coefficient values. The register approach also supports the pipelined architecture by avoiding additional cycles for reading and transporting coefficient values from a remote host system memory (e.g., DRAM). In various aspects, pipeline register may be internal or external to linear approximator 604A-C.

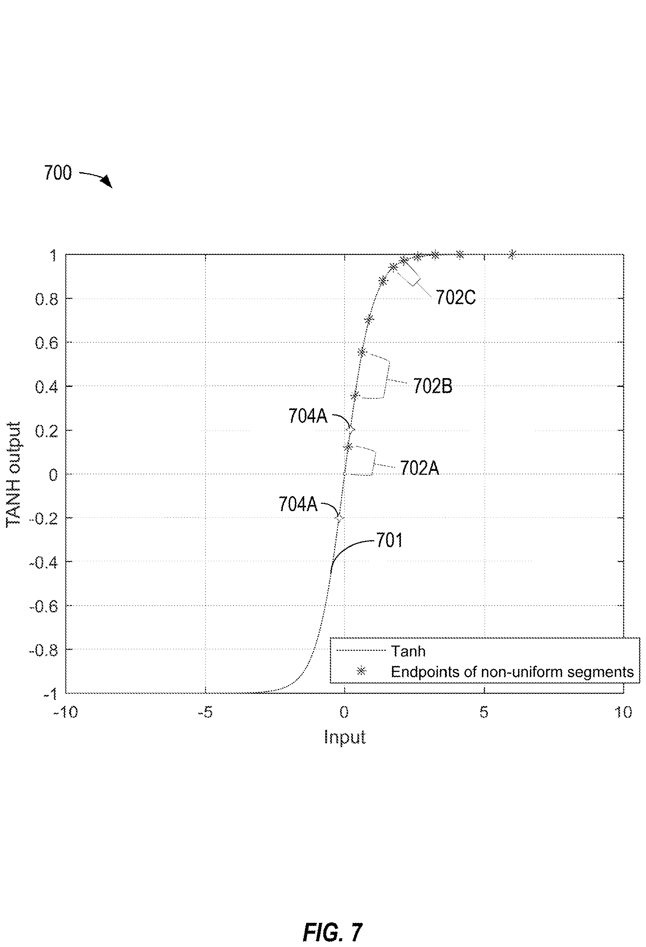

In some implementations, as depicted with respect to architecture 600, the coefficients may be determined based on approximations of non-uniformly segmented non-linear functions, as is described in one example with respect to **FIG. 7**. In such embodiments, region finder 602 may determine the appropriate coefficients based on the region (or segment) of a non-uniformly segmented approximation according to the input $x$. **FIG. 6** thus depicts the region finder's output "REGION_SEL" as passed in a pipelined fashion through the various stages of linear approximation.

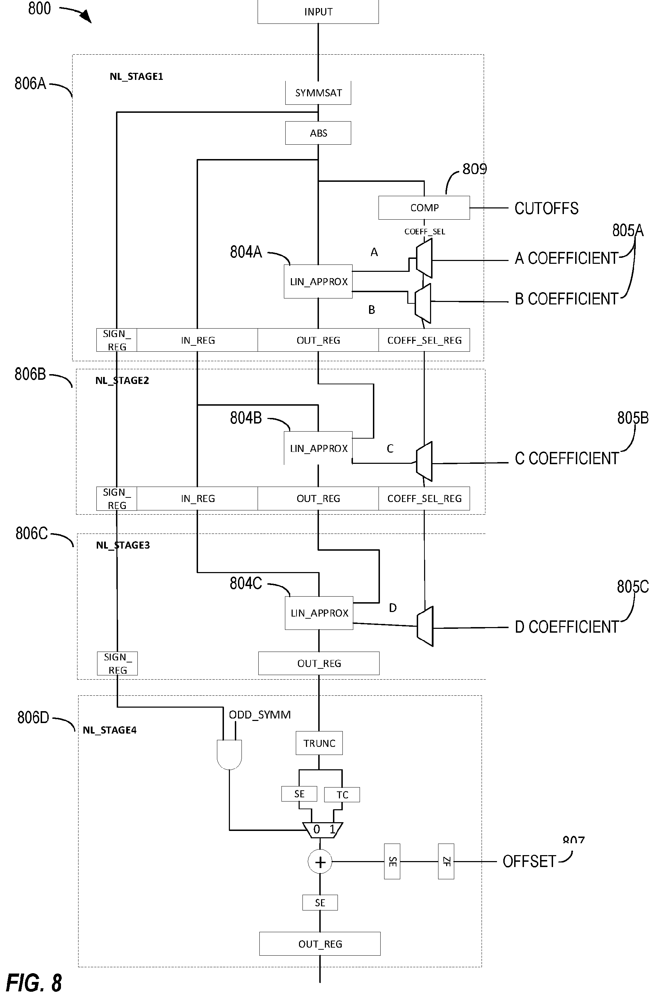

Note that the "regions" being found by region finder 602 are segments of the "domain" of an original nonlinear function. That is, a nonlinear function may be defined over a domain from negative infinity to positive infinity, and that domain can be partitioned into segments. In various aspects described herein, the segments are of non-uniform lengths. For each such segment, coefficients are chosen to best approximate the function within that segment. **FIG. 8** depicts an example circuit implementation with a region finder element 809, where "cutoffs" are used to describe segment endpoints.

In various aspects, region finder 602 may be configured to choose the entire set of coefficients used for the entire approximation. In the depicted example, because the approximation occurs serially in a pipelined manner, the determined region would get registered running alongside each approximator datapath so the determined region can be used for subsequent coefficient lookups at each stage (e.g., for linear approximators 604A-C).

Region finder 602 generally allows for a variety of offline algorithms to be used to search for and set the region choices, so the implementation need not be limited by how the regions are found. For example, a cubic spline algorithm may be used to ensure a continuous derivative across region boundaries, which is beneficial for model training. In another example, the mean-square error may be minimized on a per-point basis (based upon a subsequent search for best cubic coefficients given the region being considered). This second approach may achieve better accuracy in the calculation at the expensive of the continuous derivative (achieving better accuracy for inferences). Yet another approach is to set regions based upon where $2^{nd}$ or $3^{rd}$ derivatives are 0, though this approach might not use a full set of possible regions because more regions results in less error.

Finally, architecture 600 is configured to exploit odd and even symmetry properties of common neural network nonlinearity functions, such as sigmoid and hyperbolic tangent (tanh) to beneficially reduce circuit area and power during processing. Beneficially, exploiting such symmetries allows for reducing the number of coefficients that need to be stored to approximate a nonlinear function because, for example, a simple sign flip can emulate both sides (e.g., positive and negative) of the function from the origin without needing to store coefficients for both sides. In some implementations, approximation results are only calculated for positive inputs, and then the same result can be used for a negative input with the same magnitude (even symmetry) or the sign of the result may be flipped in the case of a function with odd symmetry.

In the depicted example, sign and offset corrector component 606 is configured to take as inputs the cubic approximation value $y_3$, the original input x (e.g., to determine its sign), and an offset value 607 and to apply a sign and/or offset correction to generate a final output 608. For example, the final output 608 may be calculated as offset (607) +/- $y_3$. As with coefficients 605A-C, offset 607 may be stored in local registers for efficiency and speed.

Generally, offset 607 may be used for functions that are symmetric, except not centered on $x = 0$. An example is sigmoid, which is symmetric about the line y = 0.5. In such cases, a "shifted" sigmoid is first approximated that is odd symmetric about the x-axis, and then an offset of 0.5 is added to the result.

Note that **FIG. 6** depicts an example architecture 600 including three linear approximators (604A-C) that can be used to approximate a cubic nonlinear function. In other aspects, two linear approximators may be used where a quadratic nonlinear function is intended to be approximated. Though not depicted in **FIG. 6,** in some aspects, control logic may switch the output of a linear approximator, such as linear approximator 604B to bypass a following linear approximator (such as linear approximator 604C), when only a quadratic function is needing to be approximated. In such cases, the bypass may take the output of linear approximator 604B, $y_3$, and route it to sign and offset corrector component 606.

**FIG. 7** depicts an example 700 of a hyperbolic tangent (tanh) nonlinear activation function with non-uniform segments for defining approximated function outputs.

In the depicted example, a first segment 702A is defined from the origin (x = 0) to a first point along curve 701. As depicted, segments like 702B are longer in length along curve 701 where the slope is more constant across input values in the segment, and segments like 702C are shorter in length along curve 701 where the curve is changing slope more quickly along input values in the segment. Using non-uniform segments beneficially allows for defining fewer segments across the output value range for a nonlinear function while still maintaining similar output resolution as compared to the actual function. Conventionally, to maintain resolution, a curve such as 701 was uniformly segmented, which meant that many segments had very similar output values and thus created redundant values stored in memory.

Note that each segment may generally be defined by a start point and an end point along curve 701. For example, a starting input value $x_{start}$ and an ending input value, $x_{end}$, may define a segment. Each of these segments may be associated with a set of coefficients for use in approximating the hyperbolic tangent function based input values falling within the defined range, such as $x_{start} \leq x < x_{end}$. In order to further save memory, the first segment 702A need only store the end point of the segment as the starting point (the origin) may be assumed to be x = 0. Similarly, the last segment is defined only by the endpoint of the second-to-last segment. That is, all inputs greater than or equal to the second-last segment's endpoint are considered part of the last segment.

For example, the following table gives examples of non-uniform segments that may be stored in registers for a tanh function that is going to be approximated. When the input value x falls within a particular segment (or region), then coefficients for that segment may be retrieved and used to generate an approximated function value.

**Table 3**

| Segment | $x_{start}$ | $x_{end}$ |
|---------|-------------|-----------|
| 1 | (Assumed to be 0) | 0.1250 |
| 2 | 0.1250 | 0.3750 |
| 3 | 0.3750 | 0.6250 |
| 4 | 0.6250 | 0.8750 |
| 5 | 0.8750 | 1.3750 |

Note that the hyperbolic tangent function curve 701 is an example of a function with odd symmetry. That is, the tanh output value for a positive input (e.g., 0.2 for point 704A) is equivalent to the sign-flipped output of a negative input (e.g., -0.2 for 704B) of the same magnitude. Thus, the non-uniform segments need only be defined with respect to the positive input value ranges for the hyperbolic tangent function curve 701 and a sign corrector component, such as 606 in **FIG. 6,** can appropriately flip the sign of the ultimate output (e.g., 608 in **FIG. 6)** based on the sign of the input value (x).

**FIG. 8** depicts an example of a circuit 800 for implementing a pipelined successive-linear-approximation architecture, such as described above with respect to **FIG. 6.** In particular, **FIG. 8** depicts the pipelined nature of the design, including how the region finder 809's output and a sign bit is passed through the pipeline for efficient processing.

The depicted example includes four stages 806A-806D, of which three stages include linear approximators (804A-804C, respectively) and one sign and offset correction stage 806D.

In the depicted example, various operational blocks are depicted. "SAT" represents a "saturation" block. Saturation is useful when reducing the number of integer bits used in representing a value. If a saturation module is used to reduce an input having M integer bits to an output having $N$ integer bits (where $N < M$), then input values that are larger than what can be represented with $N$ integer bits are "saturated" to either the largest positive $N$-bit number (for positive inputs) or the smallest negative $N$-bit number (for negative inputs). For example, if [$x > 0111...11$], then output y(0111...11), or if [x <= 1000...00], then output y(1000...00).

"ABS" represents a block that computes the absolute value (or magnitude) of an input.

"COMP" represents a comparator block that serves as a region finder using programmable cutoffs. The cutoffs define the endpoints of the various segments (and, indirectly, the start point for the very last segment). The output of the COMP block 809 is an identifier that indicates to which region (segment) the present input belongs. This identifier is used to select the appropriate set of coefficients to approximate the non-linear function within that segment.

In one example implementation, 11 cutoff values are used to define a total of 12 segments. By exploiting the symmetry properties of the non-linearity function, the COMP module only operates on the absolute value of the input. The following algorithm describes its operation:

```
        IF  0 <= ABS(x)  < CUTOFF1 : Select Segment 0 coefficients
   ELSE IF (CUTOFF1 <= ABS(x)  < CUTOFF2) : Select Segment 1 coefficients
   ELSE IF (CUTOFF2 <= ABS(x)  < CUTOFF3) : Select Segment 2 coefficients
                               ...
 ELSE IF (CUTOFF10<= ABS(x)  < CUTOFF11): Select Segment 10 coefficients
        ELSE IF (CUTOFF11<= ABS(x)): Select Segment 11 coefficients
```

"TRUNC" represents a truncate block, which is configured to reduce the precision of a fractional number represented in two's complement fashion by omitting the least significant bits. For example, to reduce an input from having $M$ fractional bits to having $N$ fractional bits, the least significant ($M - N$) bits are omitted (truncated).

"SYMMSAT" represents a "symmetric saturation" block. Conventional saturation (SAT) modules having $N$ integer bits saturate to either to the largest positive value ($2^{N-1} - 1$) or the smallest negative value ($-2^{N-1}$). In a symmetric saturation module, negative inputs instead saturate to one larger than the smallest negative value (e.g., ($-2^{N-1} + 1$). This way the number of distinct negative and positive outputs is identical. For example, if [$x > 0111...11$], then output y(0111...11), or if [x <= 1000...00], then output y(1000...01).

"SE" represents a sign-extension block, which is useful when increasing the number of integer bits used to represent a value. For example, when a value represented with $N$ integer bits is sought to be represented with $M$ integer bits ($M > N$), the sign bit is replicated ($M - N$) times.

"TC" represents a block used to convert a positive number to a negative number by taking its two's complement.

Finally "ZF" represents a "zero filling" block that is used when a number with $N$ fractional bits is sought to be represented as a number with M fractional bits ($M > N$), by appending ($M - N$) zeros in the least significant positions.

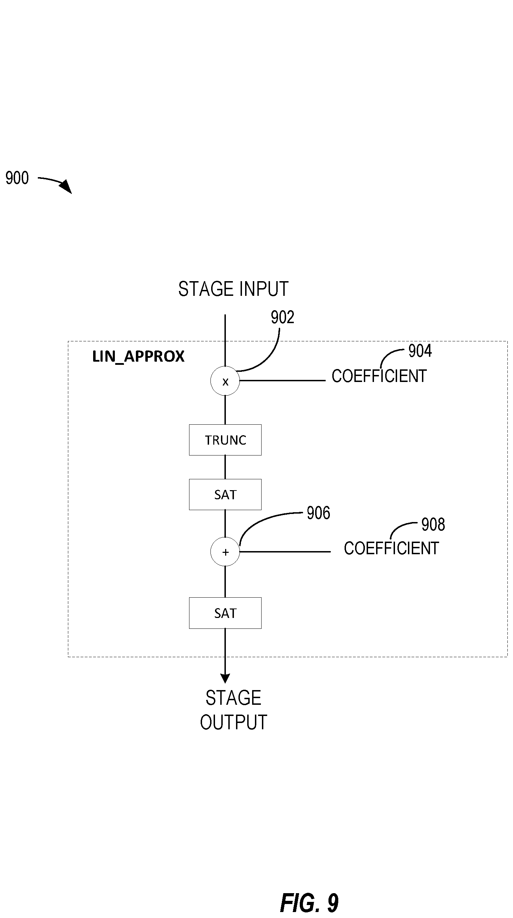

**FIG. 9** depicts an example of a linear approximator circuit 900, which may be an example of the linear approximator blocks 804A-804C in circuit 800 of **FIG. 8.** As depicted, the linear approximator circuit includes a multiplication element 902 that takes as input the stage input and a coefficient 904 as well as an adder element 906 that takes as input the output of the multiplication element after being processed by a truncation and saturation block and a second coefficient 908.

*Example Processing System*

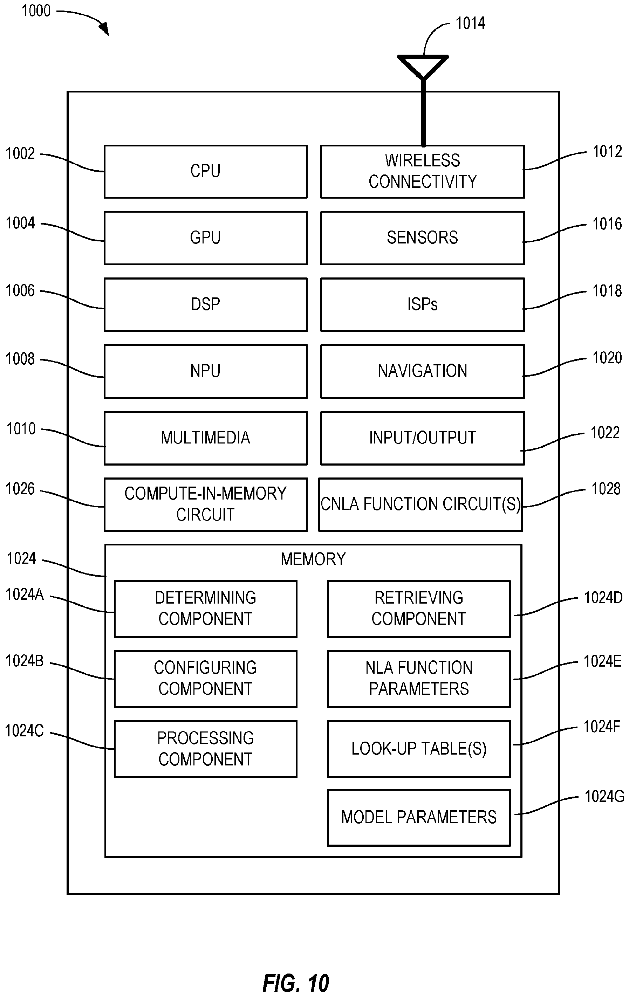

**FIG. 10** depicts an example processing system 1000 that may be configured to perform the methods described herein, such as with respect to **FIGS. 4-5.**

Processing system 1000 includes a central processing unit (CPU) 1002, which in some examples may be a multicore CPU. Instructions executed at the CPU 1002 may be loaded, for example, from a program memory associated with the CPU 1002 or may be loaded from memory partition 1024.

Processing system 1000 also includes additional processing components tailored to specific functions, such as a graphics processing unit (GPU) 1004, a digital signal processor (DSP) 1006, a neural processing unit (NPU) 1008, a multimedia processing unit 1010, and a wireless connectivity component 1012.

An NPU, such as 1008, is generally a specialized circuit configured for implementing all the necessary control and arithmetic logic for executing machine learning algorithms, such as algorithms for processing artificial neural networks (ANNs), deep neural networks (DNNs), random forests (RFs), kernel methods, and the like. An NPU may sometimes alternatively be referred to as a neural signal processor (NSP), a tensor processing unit (TPU), a neural network processor (NNP), an intelligence processing unit (IPU), or a vision processing unit (VPU).

NPUs, such as 1008, may be configured to accelerate the performance of common machine learning tasks, such as image classification, machine translation, object detection, and various other tasks. In some examples, a plurality of NPUs may be instantiated on a single chip, such as a system on a chip (SoC), while in other examples they may be part of a dedicated machine learning accelerator device.

NPUs may be optimized for training or inference, or in some cases configured to balance performance between both. For NPUs that are capable of performing both training and inference, the two tasks may still generally be performed independently.

NPUs designed to accelerate training are generally configured to accelerate the optimization of new models, which is a highly compute-intensive operation that involves inputting an existing dataset (often labeled or tagged), iterating over the dataset, and then adjusting model parameters, such as weights and biases, in order to improve model performance. Generally, optimizing based on a wrong prediction involves propagating back through the layers of the model and determining gradients to reduce the prediction error.

NPUs designed to accelerate inference are generally configured to operate on complete models. Such NPUs may thus be configured to input a new piece of data and rapidly process it through an already trained model to generate a model output (e.g., an inference).

In some embodiments, NPU 1008 may be implemented as a part of one or more of CPU 1002, GPU 1004, and/or DSP 1006.

In some embodiments, wireless connectivity component 1012 may include subcomponents, for example, for third generation (3G) connectivity, fourth generation (4G) connectivity (e.g., 4G LTE), fifth generation connectivity (e.g., 5G or NR), Wi-Fi connectivity, Bluetooth connectivity, and other wireless data transmission standards. Wireless connectivity processing component 1012 is further connected to one or more antennas 1014.

Processing system 1000 may also include one or more sensor processing units 1016 associated with any manner of sensor, one or more image signal processors (ISPs) 1018 associated with any manner of image sensor, and/or a navigation processor 1020, which may include satellite-based positioning system components (e.g., GPS or GLONASS) as well as inertial positioning system components.

Processing system 1000 may also include one or more input and/or output devices 1022, such as screens, touch-sensitive surfaces (including touch-sensitive displays), physical buttons, speakers, microphones, and the like.

In some examples, one or more of the processors of processing system 1000 may be based on an ARM or RISC-V instruction set.

Processing system 1000 also includes various circuits in accordance with the various embodiments described herein.

In this example, processing system 1000 includes compute-in-memory (CIM) circuit 1026, which may be configured to perform efficient multiply-and-accumulate (MAC) functions for processing machine learning model data. Processing system 1000 further includes configurable nonlinear activation (CNLA) function circuit 1028. In some cases, CNLA function circuit 1028 may be like CNLA function circuit 200 described with respect to **FIGS. 2, 3, 6, 8,** and 9. CNLA function circuit 1028, as well as others not depicted, may be configured to perform various aspects of the methods described herein, such as methods 400 and 500 with respect to **FIGS. 4** and **5,** respectively.

In some examples, CNLA function circuit 1028 may be implemented as a part of another processing unit, such as CPU 1002, GPU 1004, DSP 1006, or NPU 1008.

Processing system 1000 also includes memory 1024, which is representative of one or more static and/or dynamic memories, such as a dynamic random access memory, a flash-based static memory, and the like. In this example, memory 1024 includes computer-executable components, which may be executed by one or more of the aforementioned components of processing system 1000.

In particular, in this example, memory 1024 includes determining component 1024A, configuring component 1024B, processing component 1024C, retrieving component 1024D, nonlinear activation function parameters 1024E, look-up table(s) 1024F, and model parameters 1024G (e.g., weights, biases, and other machine learning model parameters). One or more of the depicted components, as well as others not depicted, may be configured to perform various aspects of the methods described herein.

Generally, processing system 1000 and/or components thereof may be configured to perform the methods described herein.

Notably, in other embodiments, aspects of processing system 1000 may be omitted, such as where processing system 1000 is a server computer or the like. For example, multimedia component 1010, wireless connectivity 1012, sensors 1016, ISPs 1018, and/or navigation component 1020 may be omitted in other embodiments. Further, aspects of processing system 1000 maybe distributed.

Note that **FIG. 10** is just one example, and in other examples, alternative processing system with more, fewer, and/or different components may be used.

*Additional Considerations*

The preceding description is provided to enable any person skilled in the art to practice the various embodiments described herein. The examples discussed herein are not limiting of the scope, applicability, or embodiments set forth in the claims. Various modifications to these embodiments will be readily apparent to those skilled in the art, and the generic principles defined herein may be applied to other embodiments. For example, changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

As used herein, the word "exemplary" means "serving as an example, instance, or illustration." Any aspect described herein as "exemplary" is not necessarily to be construed as preferred or advantageous over other aspects.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

As used herein, the term "connected to", in the context of sharing electronic signals and data between the elements described herein, may generally mean in data communication between the respective elements that are connected to each other. In some cases, elements may be directly connected to each other, such as via one or more conductive traces, lines, or other conductive carriers capable of carrying signals and/or data between the respective elements that are directly connected to each other. In other cases, elements may be indirectly connected to each other, such as via one or more data busses or similar shared circuitry and/or integrated circuit elements for communicating signals and data between the respective elements that are indirectly connected to each other.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The following claims are not intended to be limited to the embodiments shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more.

## Claims

1. A processor, comprising:

   a configurable nonlinear activation function circuit configured to:

      determine (504), based on a selected nonlinear activation function, a set of parameters for the selected nonlinear activation function; and
      generate (506) output data based on application of the set of parameters for the selected nonlinear activation function,

   the processor further **characterized in that**

      the configurable nonlinear activation function circuit comprises at least one nonlinear approximator comprising at least two successive linear approximators, and
      each linear approximator of the at least two successive linear approximators is configured to approximate a linear function using one or more function parameters of the set of parameters.

2. The processor of Claim 1, wherein each linear approximator of the at least two successive linear approximators comprises:

      a stage input;
      a coefficient input;
      a constant input; and
      a stage output.

3. The processor of Claim 1, wherein at least one nonlinear approximator comprises a cubic approximator comprising three successive linear approximators.

4. The processor of Claim 1, wherein the at least one nonlinear approximator comprises a quadratic approximator comprising two successive linear approximators.

5. The processor of Claim 2, wherein:

      the at least one nonlinear approximator further comprises a region finder component configured to determine an input value region, and
      each linear approximator of the at least two successive linear approximators is further configured to determine the coefficient input and constant input based on the input value region.

6. The processor of Claim 1, wherein the at least one nonlinear approximator further comprises a sign and offset corrector component configured to modify a stage output from at least one linear approximator of the at least two successive linear approximators, preferably wherein the sign and offset corrector component is further configured to: invert a sign of the stage output in order to modify the stage output from the at least one linear approximator of the at least two successive linear approximator, or add an offset to the stage output in order to modify the stage output from the at least one linear approximator of the at least two successive linear approximators.

7. The processor of Claim 1, wherein each linear approximator of the at least two successive linear approximators is further configured to select the one or more function parameters based at least in part on selecting one or more non-uniform segments of a function approximation in order for each linear approximator of the at least two successive linear approximators to approximate a linear function using one or more function parameters of the set of parameters.

8. A method for processing data with a configurable nonlinear activation function circuit, comprising:

   determining (504), based on a selected nonlinear activation function, a set of parameters for the selected nonlinear activation function; and
   generating (506) output data based on application of the set of parameters for the selected nonlinear activation function,
   the method further **characterized in that**

   the configurable nonlinear activation function circuit comprises at least one nonlinear approximator comprising at least two successive linear approximators, and
   each linear approximator of the at least two successive linear approximators is configured to approximate a linear function using one or more function parameters of the set of parameters.

9. The method of Claim 8, wherein each linear approximator of the at least two successive linear approximators comprises:

   a stage input;
   a coefficient input;
   a constant input; and
   a stage output.

10. The method of Claim 8, wherein at least one nonlinear approximator comprises a cubic approximator comprising three successive linear approximators.

11. The method of Claim 8, wherein the at least one nonlinear approximator comprises a quadratic approximator comprising two successive linear approximators.

12. The method of Claim 9, wherein:

   the at least one nonlinear approximator further comprises a region finder component configured to determine an input value region, and
   each linear approximator of the at least two successive linear approximators is further configured to determine the coefficient input and constant input based on the input value region.

13. The method of Claim 8, further comprising modifying a stage output from at least one linear approximator of the at least two successive linear approximators using a sign and offset corrector component, preferably wherein the sign and offset corrector component is further configured to: invert a sign of the stage output in order to modify the stage output from the at least one linear approximator of the at least two successive linear approximator, or add an offset to the stage output in order to modify the stage output from the at least one linear approximator of the at least two successive linear approximators.

14. The method of Claim 8, wherein each linear approximator of the at least two successive linear approximators is further configured to select the one or more function parameters based at least in part on selecting one or more non-uniform segments of a function approximation in order for each linear approximator of the at least two successive linear approximators to approximate a linear function using one or more function parameters of the set of parameters.

15. A non-transitory computer-readable medium comprising computer-executable instructions that, when executed by a processor comprising a configurable nonlinear activation function circuit, cause the processor to perform the method of any one of claims 8 to 14.

**Patentansprüche**

1. Prozessor, der Folgendes umfasst:
   eine konfigurierbare nicht-lineare Aktivierungsfunktionsschaltung, die so konfiguriert ist, dass sie Folgendes ausführt:

> Bestimmen (504) eines Parametersatzes für die ausgewählte nicht-lineare Aktivierungsfunktion basierend auf dieser Funktion; und
> Erzeugen (506) von Ausgabedaten durch Anwendung des Parametersatzes auf die ausgewählte nicht-lineare Aktivierungsfunktion, wobei der Prozessor **dadurch gekennzeichnet ist, dass**
> die konfigurierbare nicht-lineare Aktivierungsfunktionsschaltung umfasst mindestens einen nicht-linearen Approximator, der mindestens zwei aufeinanderfolgende lineare Approximatoren beinhaltet, und
> wobei jeder lineare Approximator der mindestens zwei aufeinanderfolgenden linearen Approximatoren so konfiguriert ist, dass er eine lineare Funktion unter Verwendung eines oder mehrerer Funktionsparameter aus dem Parametersatz approximiert.

2.  Prozessor nach Anspruch 1, wobei jeder lineare Approximator der mindestens zwei aufeinanderfolgenden linearen Approximatoren Folgendes umfasst:

> eine Stufeneingabe;
> eine Koeffizienteneingabe;
> eine Konstanteneingabe; und
> eine Stufenausgabe.

3.  Prozessor nach Anspruch 1, wobei mindestens ein nicht-linearer Approximator einen kubischen Approximator umfasst, der drei aufeinanderfolgende lineare Approximatoren umfasst.

4.  Prozessor nach Anspruch 1, wobei der mindestens eine nicht-lineare Approximator einen quadratischen Approximator umfasst, der zwei aufeinander folgende lineare Approximatoren umfasst.

5.  Prozessor nach Anspruch 2, wobei:

> der mindestens eine nicht-lineare Approximator weiterhin eine Bereichsfindungskomponente umfasst, die so konfiguriert ist, dass sie einen Eingabewertbereich bestimmt, und
> jeder lineare Approximator der mindestens zwei aufeinanderfolgenden linearen Approximatoren weiter so konfiguriert ist, dass er die Koeffizienteneingabe und die Konstanteneingabe auf der Grundlage des Eingabewertbereichs bestimmt.

6.  Prozessor nach Anspruch 1, wobei der mindestens eine nicht-lineare Approximator weiterhin eine Vorzeichen- und Offsetkorrekturkomponente umfasst, die so konfiguriert ist, dass sie eine Stufenausgabe von mindestens einem linearen Approximator der mindestens zwei aufeinander folgenden linearen Approximatoren modifiziert, vorzugsweise wobei die Vorzeichen- und Offsetkorrekturkomponente weiterhin zu Folgendem konfiguriert ist: Invertieren eines Vorzeichens der Stufenausgabe, um die Stufenausgabe des mindestens einen linearen Approximators der mindestens zwei aufeinanderfolgenden linearen Approximatoren zu modifizieren, oder Hinzufügen eines Offsets zu der Stufenausgabe, um die Stufenausgabe des mindestens einen linearen Approximators der mindestens zwei aufeinanderfolgenden linearen Approximatoren zu modifizieren.

7.  Prozessor nach Anspruch 1, wobei jeder lineare Approximator der mindestens zwei aufeinanderfolgenden linearen Approximatoren weiter so konfiguriert ist, dass er den einen oder die mehreren Funktionsparameter zumindest teilweise auf der Grundlage der Auswahl eines oder mehrerer ungleichmäßiger Segmente einer Funktionsapproximation auswählt, damit jeder lineare Approximator der mindestens zwei aufeinanderfolgenden linearen Approximatoren eine lineare Funktion unter Verwendung eines oder mehrerer Funktionsparameter des Parametersatzes approximiert.

8.  Verfahren zur Datenverarbeitung mit einer konfigurierbaren nicht-linearen Aktivierungsfunktionsschaltung, umfassend:

> Bestimmen (504) eines Parametersatzes für die ausgewählte nicht-lineare Aktivierungsfunktion basierend auf dieser Funktion; und
> Erzeugen (506) von Ausgabedaten durch Anwendung des Parametersatzes auf die ausgewählte nicht-lineare Aktivierungsfunktion,
> wobei das Verfahren weiter **dadurch gekennzeichnet ist, dass**

die konfigurierbare nicht-lineare Aktivierungsfunktionsschaltung mindestens einen nicht-linearen Approximator umfasst, der mindestens zwei aufeinanderfolgende lineare Approximatoren umfasst, und

jeder lineare Approximator der mindestens zwei aufeinanderfolgenden linearen Approximatoren so konfiguriert ist, dass er eine lineare Funktion unter Verwendung eines oder mehrerer Funktionsparameter aus dem Parametersatz approximiert.

9. Verfahren nach Anspruch 8, wobei jeder lineare Approximator der mindestens zwei aufeinanderfolgenden linearen Approximatoren Folgendes umfasst:

eine Stufeneingabe;
eine Koeffizienteneingabe;
eine Konstanteneingabe; und
eine Stufenausgabe.

10. Verfahren nach Anspruch 8, wobei mindestens ein nicht-linearer Approximator einen kubischen Approximator umfasst, der drei aufeinanderfolgende lineare Approximatoren umfasst.

11. Verfahren nach Anspruch 8, wobei der mindestens eine nicht-lineare Approximator einen quadratischen Approximator umfasst, der zwei aufeinander folgende lineare Approximatoren umfasst.

12. Verfahren nach Anspruch 9, wobei:

der mindestens eine nicht-lineare Approximator weiterhin eine Bereichsfindungskomponente umfasst, die so konfiguriert ist, dass sie einen Eingabewertbereich bestimmt, und

jeder lineare Approximator der mindestens zwei aufeinanderfolgenden linearen Approximatoren weiter so konfiguriert ist, dass er die Koeffizienteneingabe und die Konstanteneingabe auf der Grundlage des Eingabewertbereichs bestimmt.

13. Verfahren nach Anspruch 8, weiter umfassend das Modifizieren einer Stufenausgabe von mindestens einem linearen Approximator der mindestens zwei aufeinanderfolgenden linearen Approximatoren unter Verwendung einer Vorzeichen- und Offsetkorrektorkomponente, vorzugsweise wobei die Vorzeichen- und Offsetkorrekturkomponente weiterhin zu Folgendem konfiguriert ist: Invertieren eines Vorzeichens der Stufenausgabe, um die Stufenausgabe des mindestens einen linearen Approximators der mindestens zwei aufeinanderfolgenden linearen Approximatoren zu modifizieren, oder Hinzufügen eines Offsets zu der Stufenausgabe, um die Stufenausgabe des mindestens einen linearen Approximators der mindestens zwei aufeinanderfolgenden linearen Approximatoren zu modifizieren.

14. Verfahren nach Anspruch 8, wobei jeder lineare Approximator der mindestens zwei aufeinanderfolgenden linearen Approximatoren weiter so konfiguriert ist, dass er den einen oder die mehreren Funktionsparameter zumindest teilweise auf der Grundlage der Auswahl eines oder mehrerer ungleichmäßiger Segmente einer Funktionsapproximation, sodass jeder lineare Approximator von mindestens zwei aufeinanderfolgenden linearen Approximatoren eine lineare Funktion unter Verwendung eines oder mehrerer Funktionsparameter des Parametersatzes approximiert.

15. Nicht-transitorisches computerlesbares Medium, das computerausführbare Anweisungen umfasst, die, bei Ausführung durch einen Prozessor mit einer konfigurierbaren nicht-linearen Aktivierungsfunktionsschaltung, den Prozessor veranlassen, das Verfahren nach einem der Ansprüche 8 bis 14 auszuführen.

**Revendications**

1. Processeur, comprenant :

un circuit de fonction d'activation non linéaire configurable configuré pour : déterminer (504), sur la base d'une fonction d'activation non linéaire sélectionnée, un ensemble de paramètres pour la fonction d'activation non linéaire sélectionnée ; et générer (506) des données de sortie sur la base de l'application de l'ensemble de paramètres pour la fonction d'activation non linéaire sélectionnée,
le processeur étant en outre **caractérisé en ce que**
le circuit de fonction d'activation non linéaire configurable comprend au moins un approximateur non linéaire comprenant au moins deux approximateurs linéaires successifs, et
chaque approximateur linéaire des au moins deux approximateurs linéaires successifs est configuré pour s'approcher d'une fonction linéaire en utilisant un ou plusieurs paramètres de fonction de l'ensemble de paramètres.

2. Processeur selon la revendication 1, dans lequel chaque approximateur linéaire des au moins deux approximateurs linéaires successifs comprend :

une entrée d'étage ;
une entrée de coefficient ;
une entrée de constante ; et
une sortie d'étage.

3. Processeur selon la revendication 1, dans lequel au moins un approximateur non linéaire comprend un approximateur cubique comprenant trois approximateurs linéaires successifs.

4. Processeur selon la revendication 1, dans lequel le au moins un approximateur non linéaire comprend un approximateur quadratique comprenant deux approximateurs linéaires successifs.

5. Processeur selon la revendication 2, dans lequel :

le au moins un approximateur non linéaire comprend en outre un composant de recherche de région configuré pour déterminer une région de valeur d'entrée, et
chaque approximateur linéaire des au moins deux approximateurs linéaires successifs est en outre configuré pour déterminer l'entrée de coefficient et l'entrée de constante sur la base de la région de valeur d'entrée.

6. Processeur selon la revendication 1, dans lequel le au moins un approximateur non linéaire comprend en outre un composant de correction de signe et de décalage configuré pour modifier une sortie d'étage issue d'au moins un approximateur linéaire des au moins deux approximateurs linéaires successifs, préférablement dans lequel le composant de correction de signe et de décalage est en outre configuré pour : inverser un signe de la sortie d'étage afin de modifier la sortie d'étage issue du au moins un approximateur linéaire des au moins deux approximateurs linéaires successifs, ou ajouter un décalage à la sortie d'étage afin de modifier la sortie d'étage issue du au moins un approximateur linéaire des au moins deux approximateurs linéaires successifs.

7. Processeur selon la revendication 1, dans lequel chaque approximateur linéaire des au moins deux approximateurs linéaires successifs est en outre configuré pour sélectionner les un ou plusieurs paramètres de fonction sur la base, au moins en partie, de la sélection d'un ou plusieurs segments non uniformes d'une approximation de fonction afin que chaque approximateur linéaire des au moins deux approximateurs linéaires successifs s'approche d'une fonction linéaire en utilisant un ou plusieurs paramètres de fonction de l'ensemble de paramètres.

8. Procédé de traitement de données avec un circuit de fonction d'activation non linéaire configurable, comprenant :

la détermination (504), sur la base d'une fonction d'activation non linéaire sélectionnée, d'un ensemble de paramètres pour la fonction d'activation non linéaire sélectionnée ; et
la génération (506) de données de sortie sur la base de l'application de l'ensemble de paramètres pour la fonction d'activation non linéaire sélectionnée,
le procédé étant en outre **caractérisé en ce que**

le circuit de fonction d'activation non linéaire configurable comprend au moins un approximateur non linéaire comprenant au moins deux approximateurs linéaires successifs, et
chaque approximateur linéaire des au moins deux approximateurs linéaires successifs est configuré pour s'approcher d'une fonction linéaire en utilisant un ou plusieurs paramètres de fonction de l'ensemble de paramètres.

9. Procédé selon la revendication 8, dans lequel chaque approximateur linéaire des au moins deux approximateurs linéaires successifs comprend :

une entrée d'étage ;

une entrée de coefficient ;
une entrée de constante ; et
une sortie d'étage.

10. Procédé selon la revendication 8, dans lequel au moins un approximateur non linéaire comprend un approximateur cubique comprenant trois approximateurs linéaires successifs.

11. Procédé selon la revendication 8, dans lequel le au moins un approximateur non linéaire comprend un approximateur quadratique comprenant deux approximateurs linéaires successifs.

12. Procédé selon la revendication 9, dans lequel :

le au moins un approximateur non linéaire comprend en outre un composant de recherche de région configuré pour déterminer une région de valeur d'entrée, et
chaque approximateur linéaire des au moins deux approximateurs linéaires successifs est en outre configuré pour déterminer l'entrée de coefficient et l'entrée de constante sur la base de la région de valeur d'entrée.

13. Procédé selon la revendication 8, comprenant en outre la modification d'une sortie d'étage issue d'au moins un approximateur linéaire des au moins deux approximateurs linéaires successifs en utilisant un composant de correction de signe et de décalage, préférablement dans lequel le composant de correction de signe et de décalage est en outre configuré pour : inverser un signe de la sortie d'étage afin de modifier la sortie d'étage issue du au moins un approximateur linéaire des au moins deux approximateurs linéaires successifs, ou ajouter un décalage à la sortie d'étage afin de modifier la sortie d'étage issue du au moins un approximateur linéaire des au moins deux approximateurs linéaires successifs.

14. Procédé selon la revendication 8, dans lequel chaque approximateur linéaire des au moins deux approximateurs linéaires successifs est en outre configuré pour sélectionner les un ou plusieurs paramètres de fonction sur la base, au moins en partie, de la sélection d'un ou plusieurs segments non uniformes d'une approximation de fonction afin que chaque approximateur linéaire des au moins deux approximateurs linéaires successifs s'approche d'une fonction linéaire en utilisant un ou plusieurs paramètres de fonction de l'ensemble de paramètres.

15. Support non transitoire lisible par ordinateur comprenant des instructions pouvant être mises en œuvre par ordinateur qui, lorsqu'elles sont mises en œuvre par un processeur comprenant un circuit de fonction d'activation non linéaire configurable, amènent le processeur à mettre en œuvre le procédé selon l'une quelconque des revendications 8 à 14.

**FIG. 1**

**FIG. 2**

FIG. 3

400

401

INPUT DATA BUFFER

INPUT DATA

402

WEIGHT
DATA

MULTIPLY AND
ACCUMULATE CIRCUIT

PRE-ACTIVATION DATA

404

CONFIGURATION
PARAMETERS

CONFIGURABLE
NONLINEAR
ACTIVATION
FUNCTION CIRCUIT

LOOK-UP
TABLE VALUES

ACTIVATION DATA

405

OUTPUT DATA BUFFER

*FIG. 4*

500 ⤵

┌─────────────────────────────────────────────────────────────┐ ⌐ 502
│                                                             │
│        SELECT A NONLINEAR ACTIVATION FUNCTION FOR           │
│              APPLICATION TO INPUT DATA                      │
│                                                             │
└─────────────────────────────────────────────────────────────┘
                            │
                            ▼
┌─────────────────────────────────────────────────────────────┐ ⌐ 504
│                                                             │
│        DETERMINE, BASED ON THE IDENTIFIED NONLINEAR         │
│      ACTIVATION FUNCTION, A SET OF PARAMETERS FOR A         │
│    CONFIGURABLE NONLINEAR ACTIVATION FUNCTION CIRCUIT       │
│                                                             │
└─────────────────────────────────────────────────────────────┘
                            │
                            ▼
┌─────────────────────────────────────────────────────────────┐ ⌐ 506
│                                                             │
│    PROCESS INPUT DATA WITH THE CONFIGURABLE NONLINEAR       │
│    ACTIVATION FUNCTION CIRCUIT BASED ON THE SET OF          │
│        PARAMETERS TO GENERATE OUTPUT DATA                   │
│                                                             │
└─────────────────────────────────────────────────────────────┘

*FIG. 5*

**FIG. 6**

FIG. 7

**FIG. 8**

900

STAGE INPUT

902

**LIN_APPROX**

× ——————— 904
COEFFICIENT

TRUNC

SAT

906

+ ——————— 908
COEFFICIENT

SAT

STAGE
OUTPUT

*FIG. 9*

1000

1014

| | |
|---|---|
| **CPU** 1002 | **WIRELESS CONNECTIVITY** 1012 |
| **GPU** 1004 | **SENSORS** 1016 |
| **DSP** 1006 | **ISPs** 1018 |
| **NPU** 1008 | **NAVIGATION** 1020 |
| **MULTIMEDIA** 1010 | **INPUT/OUTPUT** 1022 |
| **COMPUTE-IN-MEMORY CIRCUIT** 1026 | **CNLA FUNCTION CIRCUIT(S)** 1028 |

**MEMORY** 1024

| | |
|---|---|
| **DETERMINING COMPONENT** 1024A | **RETRIEVING COMPONENT** 1024D |
| **CONFIGURING COMPONENT** 1024B | **NLA FUNCTION PARAMETERS** 1024E |
| **PROCESSING COMPONENT** 1024C | **LOOK-UP TABLE(S)** 1024F |
| | **MODEL PARAMETERS** 1024G |

**FIG. 10**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019266479 A1

**Non-patent literature cited in the description**

- Hardware Implementation of Tanh Exponential Activation Function using FPGA. **BOUGUEZZI SAFA et al.** 18TH INTERNATIONAL MULTI-CONFERENCE ON SYSTEMS, SIGNALS & DEVICES (SSD). IEEE, 2021, 1020-102
- A Survey on Efficient Realization of Activation Functions of Artificial Neural Network. **TRIPATHI RAGHUVENDRA PRATAP et al.** 2021 ASIAN CONFERENCE ON INNOVATION IN TECHNOLOGY (ASIANCON). IEEE, 27 August 2021, 1-9
- P-nets: Deep Polynomial Neural Networks. **CHRYSOS GRIGORIOS G et al.** 2020 IEEE/CVF CONFERENCE ON COMPUTER VISION AND PATTERN RECOGNITION (CVPR). IEEE, 13 June 2020, 7323-7333